# EUROPEAN PATENT APPLICATION

(11) **EP 4 807 939 A1**
(43) Date of publication of application: **16.09.2026**
(21) Application number: 25162834.3
(22) Date of filing: 11.03.2025
(51) Int. Cl.: H02J 3/38, H02J 13/00

(54) **COMPUTER-IMPLEMENTED METHOD FOR DETERMINING A POWER FLOW IN A POWER NETWORK**

(71) Applicant: ABB SCHWEIZ AG, 5400 Baden (CH)
(72) Inventor: SCHLOEDER, Matthias, 69126 Heidelberg (DE); BISKOPING, Matthias, 69493 Hirschberg (DE); PRIMAS, Bernhard, 68167 Mannheim (DE)
(74) Representative: Maiwald GmbH

(57) **Abstract**

The present invention relates to a computer-implemented method (100) for determining a power flow (80) in a physical power network (50), wherein the power network (50) comprising a first node (1, 3) and at least a second node (2, 4) which are connected via at least a physical edge (51, 52, 53, 53) on which the power flow is transmitted, comprising:
- constructing (102) a virtual network (70) comprising at least one virtual edge (71, 72, 73, 74, 75) between the first node (1, 3) and the second node (2, 4), wherein the at least one virtual edge (71, 72, 73, 74, 75) is the result of a determined number of a direct physical connection between the first node (1, 3) and the second node (2, 4) of the physical power network (50), wherein the direct physical connection comprising at least one physical edge (51, 52, 53, 54) and wherein at least one virtual power flow (75) is flowing over said at least virtual edge (71, 72, 73, 74);
- determining (104) at least one transmission constraint parameter (77) for the at least one virtual edge (71, 72, 73, 74) between the first node (1, 3) and the second node (2, 4) by determining a sum of all virtual power flows (75) flowing over the at least one virtual edge (71, 72, 73, 74), wherein the transmission constraint parameter (77) for the at least one virtual edge (71, 72, 73, 74) is equal or smaller than a defined technical power constraint parameter (76) for the at least one physical edge (51, 52, 53, 54);
- determining (106) the physical power flow (80) for the at least one physical edge (51, 52, 53, 54) of the physical network (50) based on the determined at least one transmission constraint parameter for the at least one virtual edge (71, 72, 73, 74), wherein the determined physical power flow on the at least one physical edge (51, 52, 53, 54) represents the sum of determined virtual power flows (75) on the at least one virtual edge (71, 72, 73, 74) that corresponds to the at least physical edge (51, 52, 53, 54).

## Description

### FIELD OF THE INVENTION

The present invention relates to computer-implemented method for determining a power flow in a power network.

### BACKGROUND OF THE INVENTION

In EP4481647 A1, it is described how a virtual energy network can be used for the generation of a so-called origin label, which makes a statement on the source of consumed energy which is similar to certificates on meat, which specify the kind of animal husbandry of the processed animals.

However, the approach described therein has some issues that need also to be taken care of when operating a physical power network.

First, a logic is described that is used for the creation of the virtual powerlines or virtual edges (which basically connect each possible source of energy with each possible connected sink of energy) and thus the virtual network. However, it is left open, how this can be done algorithmically. In a real application, however, an algorithmic approach is crucial, in particular for larger networks and in view of networks that might be changing over time.

Second, for each physical powerline or virtual edge, there are physical limits for the power transmission. If one wants to conduct computations on the virtual network, it is important that the physical limits are respected correctly since otherwise the computed solution may not be applicable to the real network.

Third, after computing virtual power-flows on the virtual network, which describe the flows of energy for each connected pair of sources and sinks, it is of particular interest how the corresponding power-flows on the real physical network behave. For example, imagine a photovoltaic system (PV) in a micro-µGrid that is connected to the µGrid with a single cable, i.e., a single powerline. If this PV sends 100kW to a first load via a first virtual powerline, and 200kW to a second load via a second virtual powerline, then a power-flow through the real, physical powerline would be 300kW. However, the computation of virtual power-flows to physical power-flows is not described. But this is a crucial aspect that should be considered in a practical application, since the adaption of the physical power-flows to a certain application scenario is an important aspect in the operation of a physical network system.

Fourth, another question that has not yet be discussed in this respect is the optimal placement of new assets in a given µGrid. If one is given a µGrid and want to connect a new asset, e.g., a battery storage system, the optimal performance of the resulting network might depend on the spatial point where the battery is placed respectively connected to the power system. This is due to the limited transmission capacity of the powerlines. In principle, it would be possible to iterate over all possible connection points, compute the optimal operation for each scenario, and then choose the best scenario according to this. However, in particular for larger power networks this is computationally expensive. Therefore, an improved approach or methodology is necessary to find a (sub)optimal asset placement with a strongly reduced number of optimization runs.

There is a need to address these issues.

### SUMMARY OF THE INVENTION

Therefore, it would be advantageous to provide an improved concept for determining a power flow in a physical power network that respects technical limitations for powerlines in the physical power network.

The object of the present invention is solved by the subject matter of the independent claims, wherein further embodiments are incorporated in the dependent claims.

In a first aspect of the present invention, there is provided a computer-implemented method for determining a power flow in a physical power network, wherein the power network comprising a first node and at least a second node which are connected via at least a physical edge on which the power flow is transmitted, comprising:
- constructing a virtual network comprising at least one virtual edge between the first node and the second node, wherein the at least one virtual edge is the result of a determined number of a direct physical connection between the first node and the second node of the physical power network, wherein the direct physical connection comprising at least one physical edge and wherein at least one virtual power flow is flowing over said at least virtual edge;
- determining at least one transmission constraint parameter for the at least one virtual edge between the first node and the second node by determining a sum of all virtual power flows flowing over the at least one virtual edge, wherein the transmission constraint parameter for the at least one virtual edge is equal or smaller than a defined technical power constraint parameter for the at least one physical edge;
- determining the physical power flow for the at least one physical edge of the physical network based on the determined at least one transmission constraint parameter for the at least one virtual edge, wherein the determined physical power flow on the at least one physical edge represents the sum of determined virtual power flows on the at least one virtual edge that corresponds to the at least physical edge.

In other words, an important aspect of the present invention is that technical transmission constraints, e.g. technical transmission limits of a powerline within the power network system, for each edge or powerline in the physical power network are taken into account when determining the physical power-flows for each physical edge of the physical power network.

In order to achieve this, first, a virtual power network on basis of physical power network and its structure is generated or constructed by using a corresponding graph algorithm. In this step, source-to-sink connections in the power network are identified, and for all those connections it is monitored which physical connections they traverse. In a further step, for each source-to-sink connection, which consists of a sequence of physical edges, a virtual edge is introduced, connecting the source to the sink directly. The optimal energy management problem is the solved based on the virtual network and the virtual edges. In this manner, the virtual power flows on each virtual edge of the virtual power network are determined. The determined virtual edges correspond to the a sequence of physical edges, wherein the physical edges connect the first node and the second node in a direct connecting manner.

Second, on basis of the virtual power network and its virtual power flows on each of the virtual edges, by using a corresponding algorithm, a transmission constraint parameter is determined for each of the virtual edges in the virtual power network. The determined transmission constraint parameter should be smaller or equal than a defined technical power constraint parameter that is assignd to each or the respective physical edge or physical powerline of the physical power network. In this way, a transferring of the transmission constraints from physical powerlines to the virtual ones (= source-to-sink connections) is conducted. It should be noted here for a better understanding, that it is also meant having a constraint for each physical edge, the upper bound in the constraint is the technical limit of the physical edge.

Third, the real or physical power-flows, e.g. power-flows through the physical powerlines of the physical power network, on the physical power network are computed by a backtracking approach using the determined virtual power-flows to finally compute the physical power-flows on the pyhsical edges of the physical power network taking into account the determined transmission constraints.

By using the aformentioned methodology it is now possible to provide a computationally efficient method for the (sub)optimal position placement of an asset or device in a physical power network by only needing a reduced number of optimization computation cycles or runs. Details on this approach are provided in the further description.

In sum, the usage of that virtual paths to generate transmission constraints on a virtual network graph, and a backtracking of solutions that are computed on the graph to the physical network, is a core feature of the present invention to determine the corresponding physical power-flows of a physical power network.

In this respect, it is important to note that the aforemented approach for determining power-flows in a power network, is mainly used for µGrids which can be represented by a circle-free graph, which is true for most grids. However, of course, the present invention is not restricted to these type of power grids.

The presented invention has the following advantages:
- Improved virtual network generation and backtracking

The method represents a massive facilitation for the generated virtual network. It is ensured that transmission constraints of powerlines of the power network are considered correctly in the virtual network, which is crucial regarding the feasibility of the computed solution in a real application.

The method of the present inventnion provides useful information for the user or operator of a power network what power-flows actually to apply in practice. This makes the origin labeling process useful in practice.

In addition, the present invention can give meaningful insights regarding the stress that is caused by single source-to-sink connections in a power network. This is in particular important during the planning phase of a power network, where a replacement could be considered, or the thickness of cables can be adjusted.

### - Efficient (sub)optimal asset placement

The present invention can propose a suggestion with only a few computed optimization runs, which is much more efficient that the obvious iterative approach. This solution could be seen as an add-on for an EMCore-solution. It could also serve as a consulting tool or as sales support, e.g. if one wants to show the potential of a new battery where sales people would typically want to show the highest possible improvement, which depends on the battery placement in the µGrid.

According to an example, the physical power network is configured as a circle-free (tree-structure) micro-grid network. This has the advantage that a defined assignment of physical edges to virtual edges is possible and thus, that computation of the physical power-flows can be performed in a more efficient manner.

According to an example, the step of constructing the virtual network is performed by using a graph algorithm. This has the advantage that computation of the physical power-flows can be performed in a more efficient manner.

According to an example, the first node is an energy-releasing source node and the second node is an energy-absorbing sink node. In this way, definition of the physical network is simplified that results in an effective determination of the corresponding virtual power network.

According to an example, the first node comprises of at least a load device and wherein the second node comprises at least an energy generating device. In this way, definition of the physical network is simplified that results in an effective determination of the corresponding virtual power network.

According to an example, the virtual network is constructed in an automated manner to find all possible direct physical connections between the first node and the second node. In this way, determing the virtual network is simplified that results in an effective determination of the corresponding virtual power network.

According to an example, the first node is one of the following: a photovoltaic system, a wind turbine, a water turbine, an electrical grid, a generator, a battery and/or wherein the second node is a a load device, a battery. In this way, determining the physical power-flows can be adapted to changing application needs of the power network.

According to a further example of the present invention, a computer-implemented method is provided for determining an optimal connection placement of a newly-added device within the physical network according to any one of the preceding examples, comprising the following steps:
- connecting the new device to an connection point of the physical network,
- constructing the virtual network,
- determining a first transmission constraint parameter without the new device for all virtual edges,
- determining a second transmission constraint parameter including the device for all connection points of the virtual network,
- determining, whether the second transmission constraint parameter fulfils the first transmission constraint parameter for all virtual edges, and if the transmission constraint condition is not fulfilled, select the at least one connection point that results in the least violation of the first transmission constraint parameter.

In a second aspect of the present invention, a data processing device is provided comprising means for carrying out the method of any one of the previous examples.

In a third aspect of the present invention, a computer program is provided comprising instructions which, when the program is executed by a computer, cause the computer to carry out the steps of the method of any one of the previous examples.

In a fourth aspect of the present invention, a computer-readable medium is provided comprising instructions which, when executed by a computer, cause the computer to carry out the method according to any one of the of the previous examples.

### BRIEF DESCRIPTION OF THE DRAWINGS

Exemplary embodiments will be described in the following with reference to the following drawings:
Fig. 1 illustrates a schematic diagram of the method for determining a power-flow in a physical power network to an embodiment of the present invention;
Fig. 2a illustrates a schematic physical power network according to an embodiment of the present invention;
Fig. 2b illustrates a schematic schematic virtual power network that corresponds to the physical power network of Fig. 2a according to an embodiment of the present invention;
Fig. 3 illustrates a schematic diagram of the method for determining an optimal placement of a device in a physical power network according to an embodiment of the present invention.
Fig. 3a illustrates a schematic physical power network according to an embodiment of the present invention;
Fig. 3b illustrates a schematic schematic virtual power network that corresponds to the physical power network of Fig. 3a according to an embodiment of the present invention; and
Fig. 3c illustrates a schematic schematic virtual power network that corresponds to the physical power network of Fig. 3a according to an embodiment of the present invention.

### DETAILED DESCRIPTION OF THE DRAWINGS

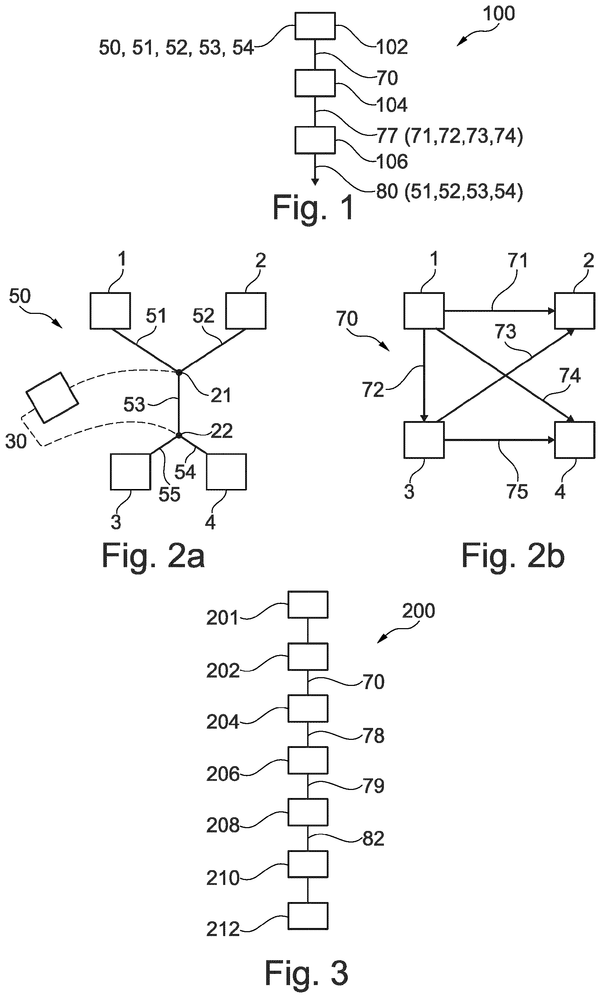

Fig. 1 in combination with Fig. 2a and 2b illustrates a schematic diagram of the method 100 for determining a power-flow 80 in a physical power network 50 to an embodiment of the present invention.

The computer-implemented method 100 for determining a power flow 80 in a physical power network 50, wherein the power network 50 comprising a first node 1, 3 and at least a second node 2, 4 which are connected via at least a physical edge 51, 52, 53, 53 on which the power flow is transmitted, comprising the following steps:
In a first step 102, constructing of a virtual network 70 is provided comprising at least one virtual edge 71, 72, 73, 74, 75 between the first node 1, 3 and the second node 2, 4, wherein the at least one virtual edge 71, 72, 73, 74, 75 is the result of a determined number of a direct physical connection between the first node 1, 3 and the second node 2, 4 of the physical power network 50, wherein the direct physical connection comprising at least one physical edge 51, 52, 53, 54 and wherein at least one virtual power flow 75 is flowing over said at least virtual edge 71, 72, 73, 74.
In a second step 104, determining of at least one transmission constraint parameter 77 for the at least one virtual edge 71, 72, 73, 74 between the first node 1, 3 and the second node 2, 4 is provided by determining a sum of all virtual power flows 75 flowing over the at least one virtual edge 71, 72, 73, 74, wherein the transmission constraint parameter 77 for the at least one virtual edge 71, 72, 73, 74 is equal or smaller than a defined technical power constraint parameter 76 for the at least one physical edge 51, 52, 53, 53;
In a third step 106, determining of the physical power flow 80 for the at least one physical edge 51, 52, 53, 54 of the physical network 50 is provided based on the determined at least one transmission constraint parameter for the at least one virtual edge 71, 72, 73, 74, wherein the determined physical power flow on the at least one physical edge 51, 52, 53, 54 represents the sum of determined virtual power flows 75 on the at least one virtual edge 71, 72, 73, 74 that corresponds to the at least physical edge 51, 52, 53, 54. In this respect, it should be noted or to say it in other words, where the sum of virtual power flows over the at least one physical edge is smaller or equal to the technical limit of the at least one physical edge.

Optionally, the physical power network 50 is configured as a circle-free (tree-structure) micro-grid network.

Optionally, the step of constructing the virtual network 70 is performed by using a graph algorithm, e.g. a shorted-path algorithm.

Optionally, the first node 1, 3 is an energy-releasing source node and the second node 2, 4 is an energy-absorbing sink node.

Optionally, the first node 2, 4 comprises of at least a load device and wherein the second node 1, 3 comprises at least an energy generating device.

Optionally, the virtual network 70 is constructed in an automated manner to find all possible direct physical connections between the first node 1, 3 and the second node 2, 4.

Optionally, the first node 1, 3 is one of the following: a photovoltaic system, a wind turbine, a water turbine, an electrical grid, a generator, a battery and/or wherein the second node 2, 4 is a a load device, a battery.

For a better understanding of the aforementioned technical approach, each of the steps 102, 104 and 106 of the methodology 100 to determine a physical power flow 80 of a physical power network 50 is explained in more detail using the Fig. 2a and 2b.

Fig. 2a illustrates a schematic physical power network 50 in form of a network graph according to an embodiment of the present invention.

Fig. 2b illustrates a schematic schematic virtual power network 70 in form of a network graph that corresponds to the physical power network 50 of Fig. 2a according to an embodiment of the present invention.

The step 102 of constructiong or generating a virtual network 70 is based on the physical power network 50 as shown in Fig. 2a.

The power network 50 has the following structure as shown in Fig. 2a. The structure of the power network 50, however, is only one possible example to explain the core aspects of the present invention ina clear manner.

Of course, the power network 50 can have any possible structure and in an ideal manner, the power network should be a circle-free power network. This is not a premise to make the method 100 work, but in case the provided power network is not circle-free, it should be noted that the assignments of physical edges and virtual edges are not that distinct and thus, have be selected individually.

For step 102, a graph algorithm is used to find source-to-sink connections and store the physical connections which are traversed. This way, a mapping from the source-to-sink connections to an ordered list of traversed physical connections is obtained.

The first node 1 may be a photovoltaic system or power generator that releases energy to other devices of the network, e.g. load 2 or a grid 3 or a load 4. Consequently, the first node 2 is an energy source node and the second node 2, e.g. loads 2, 4, the grid 3 absorbe the received energy are called enegy sinks nodes.

As shown in Fig. 2a, different direct physical connections between the source-nodes and the sink-nodes are established by using physical edges or physical powerlines:
For example, a direct physical connection between the first node 1 and the second node 2 is provided by using the physical edges or physical powerlines 51 and 52. From the first node 2 to the node 3 a direct physical connection is set up by using the physical edges 51, 53 and 55.

In another example, the grid 3 may provide energy to the load 1 via the direct physical connection that is implemented by the physical edges 55, 53 and 52.

Another direct physical connection, as shown in Fig. 2a, may be from first node 1 to second node 4 via the physical edges 51, 53, 54.

On each of these physical edges, physical power-flows may flow in one or /and different flow directions from and to the connected source-sinks nodes and its corresponding devices. It should be noted here that a battery or a grid may release energy and / or may absorbe energy when it is loaded by a generator and thus, the battery or the grid may be assigned to a source- and/or sink node.

The virtual network 70 of Fig. 2b according to step 102 of the method 100 in the aforementioned described manner is then built by directly connecting the sources to the connected sinks.

In order to stick to the provided example, the virtual network 70 of Fig. 2b comprises virtual edges 71, 72, 73, 74, 75 which correspond to a sum of physical edges 51, 52, 53, 54, 55 of the power network 50 of Fig. 2a which build direct connections between the corresponding source- and sink nodes.

For example, as shown in Fig. 2b, the virtual edge 73 from node 3 (= source node, grid) to node 2 (= sink node, load) may be built by the direct physical connection using the physical edges 55, 53, 52 as shown in Fig. 2a.

In another example, the virtual edge 71 from node 1 (= source node) to node 2 (= sink node) may be built by by the direct physical connection using the physical edges 51, 52 as shown in Fig. 2a.

In particular, the physical edge 53, as an example, in the physical power network 50 of Fig. 2a experiences multiple physical power-flows flowing, e.g. from node 1 to 4 or/and node 3 to node 2 in different or opposite directions between the different source-nodes and sink-nodes.

However, multiple physical power flows on such a a physical edge 53 result in a transmission stress for said edge 53 which usually has only a limited transmission parameter/property or a transmission constrained parameter due to the thickness of said cable for said edge 53.

Thus, it is important for said edge 53 as well as all other edges in the power network 50, how much power flows effectively over them during an operation of the power network 50 when regarding each physical edge and its individual transmission limits. The present invention helps to adjust the thickness of said cables in a planning phase of the power network when the corresponding physical power flows over these edges are known.

In step 102, modified shortest path algorithms are used to find all possible physical connections from the source-nodes, e.g. node 1 to the sink-nodes, e.g. node 2, 3, 4. Then, the physical connections are sorted out that pass a node that is not a junction (e.g., a battery has inflowing and outflowing edges, but the nodes on the inflow side are not directly connected to the nodes on the outflow side). Each of the resulting connections correspond to a so-called virtual powerline or virtual edge, e.g. virtual edge 71 in Fig. 2b from physical edges 51 and 52 which build a direct connection between node 1 and node 2. The virtual network 70 as showin in Fig. 2b is a possible illustration of a resulting virtual network.

For the second step 104 of determining at least one transmission constraint parameter for the at least one virtual edge, the following can be explained:
After determining the virtual power-flows on each edge of the virtual network 70 in step 102, in step 104, a so-called inverted mapping. This means that the (directed) physical connections, e.g. edges 51 and 52 in the network of Fig. 2a to the source-to-sink connections, e.g. the corresponding virtual edge 71 of the virtual network of Fig. 2b, that traverse them. From this inverted mapping, one can read out the necessary information to build the transmission constraints on the virtual powerlines/edges (which can be seen as source-to-sink connections).

In regard of the third step 106 of the method 100, backtracking is performed which means that the inverted mapping from the second step 104 is used with the same logic that was used to formulate the transmission constraints on the virtual powerlines in order to compute the physical power-flows from given virtual power-flows through the virtual powerlines.

For the method 100, additional aspects are provided in the following:
Instead of measuring the constraint violation as such, one could also check the costs for resolving the constraint violation, e.g. by adapting the thickness of the physical powerlines. For this, for the particular lines one would need a mapping that maps the missing line capacity to the estimated costs that arise for adding this capacity. This way, one could find the cheapest option for fixing the network in order to make the relaxed solution feasible.

This can be interesting in situations, in which the virtual solution must be put into practice in any case. Despite that, one could also use to outcome to compare the costs which would arise from enlarging the capacity with the optimality loss that is caused by the insufficient line capacity. This gives an indicator when the costs for fixing the physical issue would pay off.

In a real power system, overloading a powerline results in a temperature increase. A moderate short-term overload of powerlines does not necessarily need to be a problem, if the lines have enough time to cool down again.

Therefore, instead of detecting and quantifying the constraint violations as such, one could also consider the temperatures of the powerlines. For this, one would need a mapping that maps the load (or load history) of a powerline to its temperature. Also other factors, e.g., ground temperature, should be incorporated in this mapping. Now, based on the lines' temperatures and given temperature bounds, one could judge the "constraint violations" based on temperature constraints, which might be less conservative and thus reveal more opportunities than strictly sticking to the transmission constraints as originally proposed.

In the same manner as described above, any KPI that can be computed using a mapping from the powerlines and their computed load-profiles could be incorporated in order to judge "constraint violations" based on this KPI.

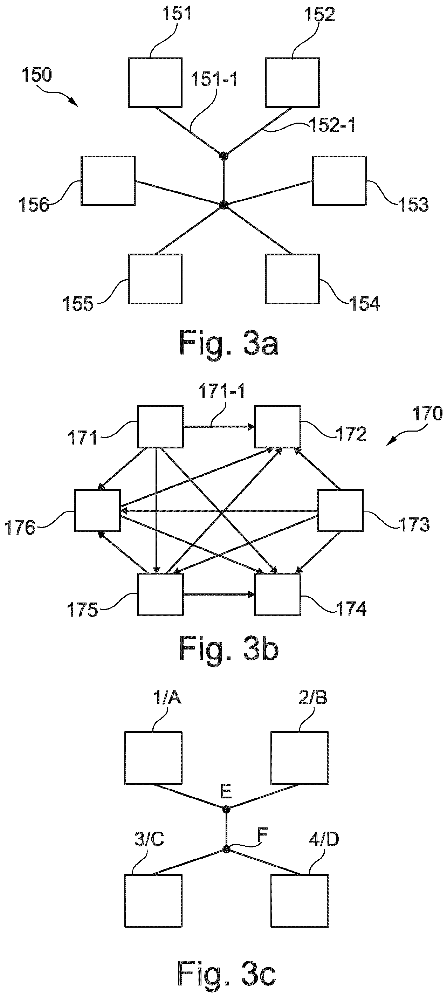

In the following second example, a second physical power network 150 as shown in Fig. 3a is used to show the method 100 in a more elaborated manner. However, the method steps of method 100 as well as the explainations as provide before can also be applied to this second example.

The physical power network 150 has a structure as shown in Fig. 3a with the following components:
- 151: PV1 (= Source or a first node)
- 151-1: Physical edge
- 151-2: Physcial edge
- 152: Load1 (= Sink or a second node)
- 153: PV2 (= Source)
- 154: Load2
- 155: Grid
- 156: Battery

The components or nodes of the network 150 connected via physical connections or physical edges in a structured manner as shown in Fig. 3a. A direct connection between a first node 151 and a second node 152 is provided by physical edges 151-1 and 151-2.

The corresponding virtual network 170, as shown in Fig. 3b, is the result of step 102 as explained above. For example, a virtual edge 171-1 corresponds to the direct physical connection with the edges 151-1 and 152-2 of the physical power network 150 of Fig. 3a.

In the following, the three method steps 102, 104 and 106 of the method 100 are explained in more detail regarding the second example of a physical power network 150 of Fig. 3a:

### 1) Step 102

For step 102 of the method 100 of constructing a virtual network 170, the following is done:
In order to determine the virtual power network 170, as already mentioned abvove, a set of nodes is considered and two new sets of nodes are build: the set of sink-nodes N_sink (=all nodes which can absorb energy, e.g., load) and the set of source-nodes N_source (=all nodes which can release energy). The two sets are not necessarily disjoint, e.g., a battery or the grid would be elements of both sets.

In a next step, modified shortest path algorithms are used to find all possible connections from the source-nodes to the sink-nodes. Here, connections that pass a node that is not a junction are sorted out, e.g., a battery has inflowing and outflowing edges, but the nodes on the inflow side are not directly connected to the nodes on the outflow side. Each of the resulting connections correspond to a so-called virtual powerline.

An illustration of a resulting virtual network 170 is displayed in Fig. 3b that corresponds to the physical power network 150 of Fig. 3a according to an embodiment of the present invention.

### 2) Step 104

For the second step 104 method 100 of determining at least one transmission constraint parameter for the at least one virtual edge, the following is done:
An algorithm is used for transferring the transmission constraints from physical powerlines/edges, e.g. 151-1, 151-2 of Fig. 3a, to the virtual edges 171-1 (= source-to-sink connections).

It is possible to modify the used path algorithms used in a., such that they do store the taken path. This way, for each virtual connection connecting a node 1/A with a node 2/B, we get a list of connections that are actually traversed when going from node 1/A to node 2/B in the physical network - see Fig. 3c that illustrates a schematic schematic virtual power network 170 according to an embodiment of the present invention. This list may look like in the following:

| |
|---|
| (1,2) ⇔ [(A,E) , (E,B)] |
| (1,3) ⇔ [(A,E) , (E,F) , (F,C)] |
| **(1,4)** ⇔ **[(A,E)** , **(E,F)** , **(F,D)]** |
| (3,2) ⇔ [(C,F) , (F,E) , (E,B)] |
| ... |

A line of the list
(1,2) ⇔ [(A, E), (E, B)]
as follows:
There is a connection from node 1 to node 2, and the connection corresponds to the path that is built by the directed physical powerlines (A, E), i.e., the line connecting node A and node E which is used in the direction A-to-E, and (E, B).

In a second step, the mapping from the virtual powerlines or edges to the real powerlines / edges is inverted. Here, inverting means that for every physical connection (X, Y), the virtual connections that traverse the connection (X, Y) are determined. This may look like the following:

| |
|---|
| (A,E) ⇔ [(1,2) , (1,3), (1,4)] |
| (E,B) ⇔ [(1,2) , (3,2)] |
| (E,F) ⇔ [(1,3) , (1,4) , (2,3), (2,4)] |
| ..... |

In this case, a line
(A, E) ⇔ [(1,2), (1,3), (1,4)]
means that the physical connection between A and E is actually traversed in direction A-to-E when following each of the virtual (=direct source-to-sink) paths (1,2), (1,3), and (1,4), and there are no more source-to-sink paths that pass the physical connection between A and E in the direction A-to-E.

Now, the inverted mapping can directly be used to determine the transmission constraints on the virtual powerlines. As an example, let us consider the physical powerline connecting the nodes E and F (see here Fig. 3c).

When proceeding as described above, in the "inverted mapping", we would find
- (E, F) ⇔ [(1,3), (1,4), (2,3), (2,4)]
- (F, E) ⇔ [(3,2)]

Let *x*_{(*i,j*)} denote the (possibly virtual) power-flow, which transports energy from node *i* to node *j*, where virtual power-flows are marked by using numbers for the placeholders *i* and *j*, and physical power-flows by using capital letters for the placeholders *i* and *f*. Due to out modeling, the virtual power-flows are assumed to take non-negative values, while the physical flows can take negative values as well, and we have -*x*_{(*X,Y*)} = *x*_{(*Y,X*)}*.*

Furthermore, let *u̅_{EF}* be an upper bound for the physical power-flow from node E to node F, and let *u̅_{FE}* be an upper bound for the physical power-flow from node F to node E (most likely, we have *u̅_{EF}* = *u̅_{FE}*).

As constraints on the virtual power-flows, we get $\left[{x}_{\left(1, 3\right)}+{x}_{\left(1, 4\right)}+{x}_{\left(2, 3\right)}+{x}_{\left(2, 4\right)}\right] - \left[{x}_{\left(3, 2\right)}\right] \leq {\overline{u}}_{EF}$ and $\left[{x}_{\left(3, 2\right)}\right] - \left[{x}_{\left(1, 3\right)}+{x}_{\left(1, 4\right)}+{x}_{\left(2, 3\right)}+{x}_{\left(2, 4\right)}\right] \leq {\overline{u}}_{FE}$ which can be combined by the chain of inequalities $- {\overline{u}}_{FE} \leq \left[{x}_{\left(1, 3\right)}+{x}_{\left(1, 4\right)}+{x}_{\left(2, 3\right)}+{x}_{\left(2, 4\right)}\right] - \left[{x}_{\left(3, 2\right)}\right] \leq {\overline{u}}_{EF} .$ (remark that the indices in the formula stem from the inverted mapping).

By considering all pairs (X, Y) and (Y, X), a complete set of transmission constraints for the virtual powerlines is obtained. In case the pair (Y, X) does exist in the inverted mapping, the corresponding terms are simply ignored.

### 3) Step 106

For step 106 of the method 100, the following is done:
Backtracking is provided which refers to a methodology to compute physical power-flows (i.e., power-flows through the physical powerlines) from virtual power-flows (i.e., power-flows through the virtual powerlines)

Assume, we computed a result on the virtual network 170, which includes (possibly time-dependent) virtual power-flows *x*_{(*i,j*)}. For the sake of simplicity, however, we omit the time-dependency in this presentation. In this section, we describe how to compute physical - meaning the real - power-flows, that correspond to those virtual ones and that would need to be applied in practice.

In fact, the backtracking turns out to work similar as the generation of the transmission constraints for the virtual power-flows.

As for step 104 of the method 100, we consider the physical power-flow through the powerline connecting the nodes E and F (see Fig. 3c). By the convention described above, a positive power-flow *x*_{(*E,F*)} > 0 means that energy flows from E to F (see Fig. 3c), while a negative value means that energy flows from F to E. By the same arguments with which we derived formular (1), we get ${x}_{\left(E, F\right)} = \left[{x}_{\left(1, 3\right)}+{x}_{\left(1, 4\right)}+{x}_{\left(2, 3\right)}+{x}_{\left(2, 4\right)}\right] - \left[{x}_{\left(3, 2\right)}\right]$ (the physical power-flow through the powerline connecting E and F is exactly the sum of virtual power-flows, that "traverse" this powerline).

Assuming that one is equipped with an algorithm that computes results on the virtual network, as a direct gain of the third step 106, we get
- The stress on the physical transmission lines that would be caused by the "virtual" solution and in particular by the single virtual powerlines in practice (if one particular source-to-sink connection causes a lot of stress, this might be a hint that replacing the source or sink could be a good idea).
- The physical connection that is stressed most.

This could also be interesting in the planning phase, where one would like to choose all cables thick enough to allow for certain power-flows, but not unnecessarily thick to avoid costs.

As a further aspect of the present invention, in this following, a method is described to determine an optimal placement of an asset in a physical network. For this, the method steps of the method 100 are used as a basis and are slightly adapted, where necessary.

Fig. 3 illustrates a schematic diagram of the method 200 for determining an optimal placement of a newly-added device 30 within the physical network 50 according to an embodiment of the present invention.

The computer-implemented method 200 for determining an optimal connection placement of a newly-added device 30 to or within the physical network 50 on basis of the method step for determining a power flow in a physical power network as provided before, comprises the following steps:
In a first step 201, connecting the new device 30 to an connection point 21, 22 of the physical network 50 is provided.

In a second step 202, constructing of the virtual network 70 is provided in a manner as described previously.

In a third step 204, determining of a first transmission constraint parameter 78 without the new device 30 for all virtual edges 71, 72, 73, 74 is provided.

In a fourth step 206, determining of a second transmission constraint parameter 79 including the device 30 for all connection points 21, 22 of the virtual network 70 is provided.

In a fifth step 208, it is determined, whether the second transmission constraint parameter 79 fulfils the first transmission constraint parameter 78 for all virtual edges 71, 72, 73, 74, and if the transmission constraint condition is not fulfilled, select the at least one connection point 21, 22 that results in the least violation of the first transmission constraint parameter 79. After the fifth step, the method could be stopped here, but if the computation result should be optimized, then the further optional steps 210 and 212 may be performed afterwards.

In an optional sixth step 210, computing of a third real transmission constraint parameter 82 based on the selected connection point 21, 22.

In an optional seventh step 212, choosing or selecting of the connection point of the at least one connection point 21, 22 for which the third transmission constraint parameter 82 fulfils the transmission constraint condition is provided.

For the above-mentioned method steps of method 200 which are nearly identical to the method steps of method 100 with minor differences, the following is said as useful background information:
If it is not intended to add new distribution nodes (junctions) to the power network system, there are exactly two options (which enable interaction of the new asset with the whole µGrid).

Due to the transmission constraints (i.e., the limits on power that can be transported through a cable), the network might perform differently depending on the chosen connection point, e.g., for charging from the grid the connection point 22 might be better suited, while for charging from the PV, the connection point 21 seems advantageous.

Given PV generation profiles and load profiles for a longer time horizon, by solving a mathematical optimization problem one can simulate the optimal behavior of the µGrid during that time-horizon given a certain goal to pursue (which is usually to minimize economical costs that arise). This optimal behavior depends on the topology of the µGrid (meaning the way the nodes are connected) and is consequently different for different placements of new assets.

In principle, one could iterate over each possible connection point on the physical grid (in our simple example there are only two options) and then choose the configuration which produces the better solution in terms of the resulting costs. For large networks, there might be various options where to connect the new assets, which makes the iterative approach computationally costly.

To avoid these computational costs, we propose another approach, which actually works with a strongly reduced number of optimization-runs.

For simplicity, the following is assumed:
For all connecting points (i.e., nodes, to which the new asset can be connected) there is a (not necessarily direct) connection to all other nodes that - in each case - only passes junctions.

In the case the assumption is not valid, the network can be subdivided into subcomponents (using graph algorithms) such that assumption holds for every subcomponent. Then following a similar approach as depicted above, the number of necessary optimization runs equals at least the number of subcomponents.

The virtual network that is created out of the physical network using the algorithm described in a. is independent from the placement of the new asset (this is a consequence of the assumption).

However, the transmission constraints generated by the approach that was described in step 104 / 206 depend on the placement of the asset.

Based on these observations, the following general procedure is proposed to find an optimal placement of the asset 30 in the power network 50:
1. Connect the new asset to an arbitrary connection point.
2. Generate the virtual network.
3. Ignore the new asset in the transmission constraints that are generated following b) for the first shot.
4. Solve the relaxed optimization problem on the virtual network.
5. Now iterate over all possible connection points:
6. Generate the transmission constraints following b) now including the new asset.
7. Check if the constraints are satisfied by the computed optimal solution.

If the constraints are satisfied, STOP (in this case, the solution of the relaxed problem is feasible for a non-relaxed problem).

If they are violated, store the violation (measured, e.g., by summed-up absolute violation).
8. In case the constraints are not satisfied for all configurations, select the connecting point that resulted in the least violation. In case multiple connecting points yield the same violation, select all of them.
9. For all selected connecting points, generate the correct transmission constraints and compute the corresponding optimal solution by solving a mathematical optimization problem. Then choose the connecting point yielding the best (e.g., least in case of minimization problems) optimal solution in terms of the optimization criterion.
10. STOP computation.

In summary, checking the transmission constraint violations can be done much faster than solving an optimization problem that incorporates these constraints. Hence, as a result of the aforementioned method 200, a significant speed up compared to solving one optimization problem per connecting point can be achieved.

Further, with this background information, the steps of method 200 are explained to carve out the important aspects:
Regarding the (sub)optimal placement of new asset or device, e.g. a battery, for simplicity the network as shown in Fig. 2a is regarded and which is a network in which every source is connected to every sink. In this case, it is observed that the virtual network, created using step 102 of the method 100, does not depend on the connection point to which the new asset 30 is connected.

However, this does not hold for the transmission constraints created in step 104 of method 100, which depend on the connection point. Now instead of iterating over all connection points and computing the optimal operation for the respective configuration, the new asset or device 30 is ignored when building the corresponding transmission constraint with the method step 102. In this way, the transmission constraints are relaxed and the optimal operation is only computed once.

Subsequently, iteration over the possible connection points 21, 22 is perfomed to build the full set of constraints respecting the new asset 30 (and in particular the power flows from and to the asset), and check the feasibility of the computed optimal operation. If a connection point is found for which the computed solution is indeed feasible, the computation is stopped.

However, if no configuration is feasible, the one connection points with the lowest constraint violation(s) are selected according to a specified criteria (e.g., maximum violation, integrated violation etc.) and the optimal operation only for those is computed, this time, however, considering the full set of constraints.

In a final step, the configuration among the selected is selected which yields the best result. This way, the number of optimization runs can be reduced and thus, the computational effort to find the optimal placement of the new installed device 30 in the power network 50 is reduced.

### Reference signs

- 1: PV1
- 2: Load1
- 3: Grid
- 4: Load2
- 11, 12, 13, 14: Physical edge
- 21: First connection point
- 22: Second connction point
- 30: Device
- 50: Physical network
- 51, 52, 53, 53: Physical edge
- 70: Virtual network
- 71, 72, 73, 74, 75: Virtual edge
- 75: Virtual power flow
- 76: Technical power constraint parameter
- 77, 78, 79, 82: Transmission constraint parameter
- 80: Physical power flow

## Claims

1. Computer-implemented method (100) for determining a power flow (80) in a physical power network (50), wherein the power network (50) comprising a first node (1, 3) and at least a second node (2, 4) which are connected via at least a physical edge (51, 52, 53, 53) on which the power flow is transmitted, comprising:
- constructing (102) a virtual network (70) comprising at least one virtual edge (71, 72, 73, 74, 75) between the first node (1, 3) and the second node (2, 4), wherein the at least one virtual edge (71, 72, 73, 74, 75) is the result of a determined number of a direct physical connection between the first node (1, 3) and the second node (2, 4) of the physical power network (50), wherein the direct physical connection comprising at least one physical edge (51, 52, 53, 54) and wherein at least one virtual power flow (75) is flowing over said at least virtual edge (71, 72, 73, 74);
- determining (104) at least one transmission constraint parameter (77) for the at least one virtual edge (71, 72, 73, 74) between the first node (1, 3) and the second node (2, 4) by determining a sum of all virtual power flows (75) flowing over the at least one virtual edge (71, 72, 73, 74), wherein the transmission constraint parameter (77) for the at least one virtual edge (71, 72, 73, 74) is equal or smaller than a defined technical power constraint parameter (76) for the at least one corresponding physical edge (51, 52, 53, 53);
- determining (106) the physical power flow (80) for the at least one physical edge (51, 52, 53, 54) of the physical network (50) based on the determined at least one transmission constraint parameter for the at least one virtual edge (71, 72, 73, 74), wherein the determined physical power flow on the at least one physical edge (51, 52, 53, 54) represents the sum of determined virtual power flows (75) that corresponds to the at least physical edge (51, 52, 53, 54).

2. Computer-implemented method (100) according to one of the previous claims, wherein the physical power network (50) is configured as a circle-free (tree-structure) micro-grid network.

3. Computer-implemented method (100) according to one of the previous claims, wherein the step of constructing the virtual network (70) is performed by using a graph algorithm.

4. Computer-implemented method (100) according to one of the previous claims, wherein the first node (1, 3) is an energy-releasing source node and the second node (2, 4) is an energy-absorbing sink node.

5. Computer-implemented method (100) according to claim 4, wherein the first node (2, 4) comprises of at least a load device and wherein the second node (1, 3) comprises at least an energy generating device.

6. Computer-implemented method (100) according to any of the previous claims, where the virtual network (70) is constructed in an automated manner to find all possible direct physical connections between the first node (1, 3) and the second node (2, 4).

7. Computer-implemented method (100) according to any one of the preceding claims, wherein the first node (1, 3) is one of the following: a photovoltaic system, a wind turbine, a water turbine, an electrical grid, a generator, a battery and/or wherein the second node (2, 4) is a a load device, a battery.

8. Computer-implemented method (200) for determining an optimal connection placement of a newly-added device (30) within the physical network (50) according to any one of the preceding claims, comprising:
- connecting the new device (30) to an connection point (21, 22) of the physical network (50),
- constructing (202) the virtual network (70),
- determining (204) a first transmission constraint parameter (78) without the new device (30) for all virtual edges (71, 72, 73, 74),
- determining (206) a second transmission constraint parameter (79) including the device (30) for all connection points (21, 22) of the virtual network (70),
- determining (208), whether the second transmission constraint parameter (79) fulfils the first transmission constraint parameter (78) for all virtual edges (71, 72, 73, 74), and if the transmission constraint condition is not fulfilled, select the at least one connection point (21, 22) that results in the least violation of the first transmission constraint parameter (79).

9. A data processing device comprising means for carrying out the method of any one of the claims 1 to 8.

10. A computer program comprising instructions which, when the program is executed by a computer, cause the computer to carry out the steps of the method of any one of the claims 1 to 8.

11. A computer-readable medium comprising instructions which, when executed by a computer, cause the computer to carry out the method according to any one of the claims 1 to 8.
